# EUROPÄISCHE PATENTSCHRIFT

(11) **EP 0 872 399 B1**
(45) Veröffentlichungstag und Bekanntmachung des Hinweises auf die Patenterteilung: **18.12.2002**
(21) Anmeldenummer: 98106661.6
(22) Anmeldetag: 11.04.1998
(51) Int. Cl.: B62B 7/04

(54) **Stapelbarer Kinderwagen**
Nestable stroller
Chariot d'enfant emboîtable

(30) Priorität: 16.04.1997 DE 29706897 U
(43) Veröffentlichungstag der Anmeldung: 21.10.1998
(73) Patentinhaber: WANZL METALLWARENFABRIK GMBH, D-89336 Leipheim (DE)
(72) Erfinder: Wanzl, Rudolf, 89340 Leipheim (DE)

(56) Entgegenhaltungen:
- WO-A-97/35536
- US-A- 4 381 870
- US-A- 5 354 079

## Beschreibung

Die Erfindung betrifft einen mit gleichen Wagen stapelbaren Kinderwagen, der ein Fahrgestell, eine Sitzeinrichtung, eine Schiebeeinrichtung und eine Aufstellfläche für die Füße eines Kindes aufweist.

Ein Kinderwagen mit den im Oberbegriff von Anspruch 1 definierten Merkmalen ist aus der US-A-4 381 870 bekannt.

Kinderwagen werden bevorzugt in Freizeitparks, Zoos, Möbelhäusern und ähnlichem zum Transport von Kindern zur Verfügung gestellt. Zur Aufbewahrung der Kinderwagen können diese platzsparend ineinandergeschoben werden. Damit die Kinder beim Sitzen ihre Füße bequem aufstellen können, weisen die Kinderwagen als Aufstellfläche ein einfaches Drahtgitter auf. Dieses Gitter bildet gleichzeitig den Anschlag für einen rückwärtig eingeschobenen Kinderwagen. Beim Ineinanderschieben kann das Aufprallen auf das Drahtgitter im Laufe der Zeit zu einer Zerstörung der Drahtoberfläche und zum Verbiegen der Aufstellfläche führen.

Die Aufgabe der Erfindung ist es, einen stapelbaren Kinderwagen mit einem speziell ausgebildeten Auschlag auszustatten.

Als Lösung der Aufgabe wird ein Kinderwagen gemäß Anspruch 1 vorgeschlagen. Vorteilhafte Ausgestaltungen der Erfindung sind in den abhängigen Ansprüchen definiert.

Die vorgeschlagene Lösung hat den Vorteil, daß beim Ineinanderschieben zweier Kinderwagen weder die Oberflächenbeschichtung der Aufstellfläche zerstört, noch die Aufstellfläche in sich verbogen wird.

Die Erfindung wird anhand eines Ausführungsbeispieles näher erläutert.
Es zeigt
- Fig. 1: einen Kinderwagen mit Querstrebe, sowie
- Fig. 2: zwei ineinandergestapelte Kinderwagen.

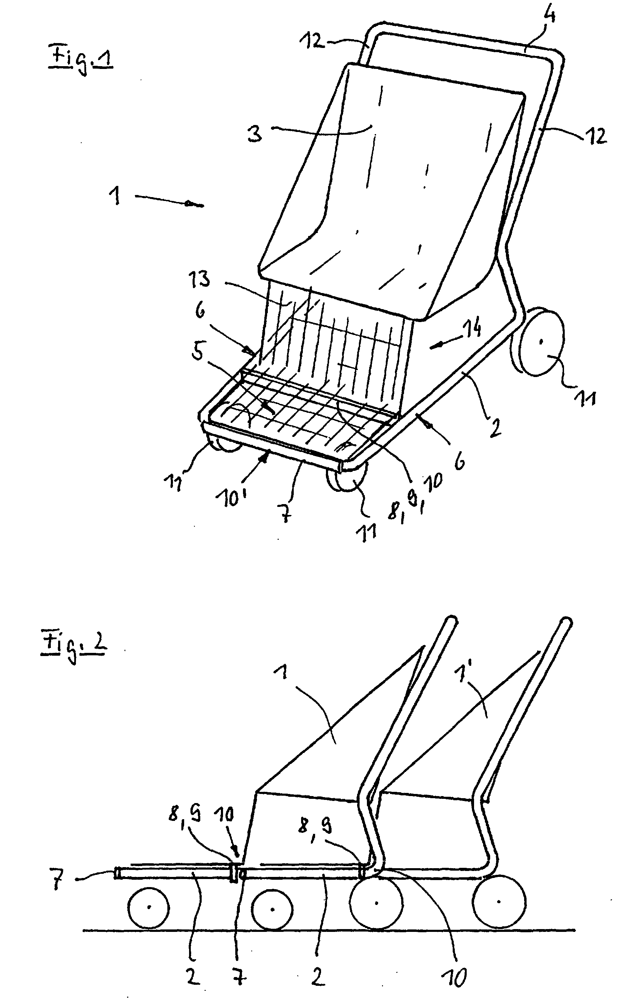

Fig. 1 zeigt einen Kinderwagen 1, der ein Fahrgestell 2 mit vier Rollen 11, eine Sitzeinrichtung 3, eine Schiebeeinrichtung 4 und eine Aufstellfläche 5 für die Füße eines Kindes aufweist. Die Schiebeeinrichtung 4 ist an zwei Längsholmen 12, die vom Fahrgestell 2 nach oben reichen, angeordnet. Das Fahrgestell 2 wird durch zwei sich nach vorne verjüngende Längsstreben 6 und eine die beiden Längsstreben 6 am vorderen Ende des Kinderwagens 1 verbindende Querstrebe 7 gebildet. Zusätzlich weist das Fahrgestell 2 eine Querstrebe 9 parallel zur vorderen Querstrebe 7 auf, die an den seitlichen Längsstreben 6 des Fahrgestelles 2 befestigt ist. Die im unteren Bereich des Fahrgestelles 2 befindliche Querstrebe 9 bildet einen Anschlag 8 für einen von hinten eingeschobenen Kinderwagen 1'. Ebenso sind als Anschlag 8 zwei Teile denkbar, die alternativ an den Längsstreben 6 an gegenüberliegenden Stellen befestigt und nicht miteinander verbunden sind. An der Querstrebe 9 können nach hinten weisende stoßelastische Teile 10 angeordnet sein. An der vorderen Querstrebe 7 ist mindestens ein stoßelastisches Teil 10' angeordnet. Die Querstrebe 9 bildet zusätzlich eine Stütze für die Aufstellfläche 5. Zwischen der Sitzeinrichtung 3 und der Aufstellfläche 5 ist eine Haltefläche 13 angeordnet, die zur Abstützung und zum Halt der Beine des Kindes vorgesehen ist. Diese Haltefläche 13 verschließt den sich zwischen Aufstellfläche 5 und Sitzeinrichtung 3 ergebenden Spalt 14.

In Fig. 2 sind zwei zum platzsparenden Stapeln ineinandergeschobene Kinderwagen 1, 1' dargestellt. Der hintere Kinderwagen 1' kann aufgrund seines nach vorne verjüngenden Fahrgestelles 2 soweit in den vorderen Kinderwagen 1 eingeschoben werden, bis die vordere Querstrebe 7 des hinteren Kinderwagens 1' an der den Anschlag 8 bildenden Querstrebe 9 des vorausbefindlichen Kinderwagens 1 anschlägt. An der den Anschlag 8 bildenden Querstrebe 9 können nach hinten weisende stoßelastische Teile 10 angeordnet sein, die den Stoß der vorderen Querstrebe 7 des hinteren Wagens 1' abpuffern. Ebenso können zum Abpuffern des Stoßes an der vorderen Querstrebe 7 nach vorne weisende stoßelastische Teile 10 angeordnet sein.

## Patentansprüche

1. Mit gleichen Wagen stapelbarer Kinderwagen (1), der ein Fahrgestell (2), eine Sitzeinrichtung (3), eine Schiebeeinrichtung (4) und eine Aufstellfläche (5) für die Füße eines Kindes aufweist, wobei im unteren Bereich des Fahrgestelles (2) wenigstens ein Anschlag (8) für einen rückwärtig einzuschiebenden Kinderwagen (1') vorgesehen ist, **dadurch gekennzeichnet, daß** der Anschlag (8) durch eine Querstrebe (9) gebildet ist und daß die Querstrebe (9) als Stütze für die Aufstellfläche (5) vorgesehen ist.

2. Kinderwagen (1) nach Anspruch 1, **dadurch gekennzeichnet, daß** die Querstrebe (9) an seitlichen Längsstreben (6) des Fahrgestelles (2) befestigt ist.

3. Kinderwagen nach Anspruch 1 oder 2, **dadurch gekennzeichnet, daß** an der Querstrebe (9) stoßelastische Teile (10) angeordnet sind, die nach hinten weisen.

## Claims

1. A pushchair (1) stackable with identical pushchairs, having a wheel frame (2), a seat arrangement (3), a pushing arrangement (4) and a rest (5) for the feet of a child, wherein at least one stop (8) for a pushchair (1') to be pushed in at the rear is provided in the lower region of the wheel frame (2), **characterised in that** the stop (8) is formed by a transverse strut (9) and **in that** the transverse strut (9) is provided as a support for the rest (5).

2. A pushchair (1) according to Claim 1, **characterised in that** the transverse strut (9) is secured to lateral longitudinal struts (6) of the wheel frame (2).

3. A pushchair according to Claim 1 or 2, **characterised in that** impact-resilient parts (10) are arranged on the transverse strut (9) and are directed rearwards.

## Revendications

1. Voiture d'enfant (1) pouvant être imbriquée dans des voitures identiques, comprenant un châssis de roulement (2), un dispositif d'assise (3), un dispositif de poussée (4) et un reposoir (5) pour les pieds d'un enfant, au moins une butée (8) étant prévue dans la région inférieure dudit châssis de roulement (2), pour une voiture d'enfant (1') devant être insérée depuis l'arrière, **caractérisée par le fait que** la butée (8) est formée par une entretoise (9) ; et **par le fait que** ladite entretoise (9) est prévue en tant qu'appui affecté au reposoir (5).

2. Voiture d'enfant (1) selon la revendication 1, **caractérisée par le fait que** l'entretoise (9) est fixée à des longerons latéraux (6) du châssis de roulement (2).

3. Voiture d'enfant selon la revendication 1 ou 2, **caractérisée par le fait que** des pièces (10) à résilience d'impact, orientées vers l'arrière, sont disposées sur l'entretoise (9).
